# EUROPEAN PATENT APPLICATION

(11) **EP 2 482 185 A1**
(43) Date of publication of application: **01.08.2012**
(21) Application number: 12000431.2
(22) Date of filing: 24.01.2012
(51) Int. Cl.: G06F 9/44

(54) **Flexible dual data attribute**

(30) Priority: 28.01.2011 US 201113016466
(71) Applicant: SAP AG, 69190 Walldorf (DE)
(72) Inventor: Lier, Karlheinz, 69190 Walldorf (DE)
(74) Representative: Müller-Boré & Partner Patentanwälte

(57) **Abstract**

A computer-generated value is provided having a first value, at a first instant, for a dual value data attribute. A user-specified value is received and stored for the dual value attribute. A field flag value for the dual value attribute, in a first flag state, specifies that the stored user-specified value is to be used during consumption of the dual value attribute. The stored user-specified value is provided for consumption by a software application based on the field flag value being in the first flag state. At a second instant, the field flag value is changed to a second flag state indicating that the computer-generated value is to be used during consumption of the dual value attribute. At a third instant, the computer-generated field value is provided for consumption by a software application based on the flag value being set to the second flag state.

## Description

### TECHNICAL FIELD

This present disclosure relates to data structures and related user interfaces, and more particularly to interactive form fields associated with virtual data attributes of a data object.

### BACKGROUND

Typical data object attributes are fixed at design time to be at least one of a user-defined attribute or computer-calculated virtual attribute in that the value of the attribute is either defined and controlled by the human user or by the computer. In some instances, as the data attribute and underlying data object are deployed and consumed by software services, the design choice to fix the attribute value as user-controlled or computer-calculated may change, based on varying factors, including user feedback, availability of better attribute calculation algorithms and data, new use cases, and other considerations. In typical systems, changing the way a data attribute's value is defined can require re-designing, or even replacing the original data attribute so that the attribute's value is defmed according to the designer's preference. Some traditional systems provide a computer-defined default value that can be overwritten by a user's entry, for example, using a user interface component associated with the data attribute. Overwriting a computer-defined default value can permanently replace and delete the default value. Similarly, attempts to restore an original default value, typically overwrites and delete user-entered attribute values, creating conflict between the default values and user's attempts to at least temporarily define alternate attribute values different from the default value.

### SUMMARY

This disclosure provides various embodiments for using a dual value data attribute. A variable computer-generated value can be provided, at a first instance, for a dual value data attribute, the variable computer-generated field value having a first value at the first instant. A user-specified value can be received for the dual value data attribute. The user-specified value for the first dual value data attribute can be stored in memory. A field flag value corresponding to the dual value data attribute can be identified as set to specify that the stored user-specified value is to be used for the dual value data attribute by software consuming the first dual value data attribute. The stored user-specified value can be provided for use by at least one software application consuming the first dual value data attribute based on the field flag value being set to the first flag state. At a second instant in time, subsequent to the first instant, the value of the field flag value can be changed from the first flag state to an alternative second flag state indicating that the computer-generated value is to be used by software consuming the first dual value data attribute. At a third instant in time subsequent to the second instant, the variable computer-generated field value can be provided for use by at least one software application consuming the particular data, wherein the variable computer-generated field value has a second value at the second instant, the second value different from the first value.

While generally described as computer implemented software that processes and transforms the respective data, some or all of the aspects may be computer implemented methods or further included in respective systems or other devices for performing this described functionality. The details of these and other aspects and embodiments of the present disclosure are set forth in the accompanying drawings and the description below. Other features, objects, and advantages of the disclosure will be apparent from the description and drawings, and from the claims.

### DESCRIPTION OF DRAWINGS

FIG. 1 illustrates an example system including data objects with associated flexible dual data attributes.

FIG. 2 is a schematic representation of an example business object.

FIG. 3A is an example class diagram of an example flexible dual data attribute.

FIG. 3B illustrates example class diagrams of interfaces for use in connection with an example flexible dual data attribute, such as the example flexible dual data attribute of FIG. 3A.

FIG. 3C illustrates an example transaction utilizing a data attribute of a data object utilizing one or more of the class methods modules illustrated and described in the examples of FIGS. 3A-3B.

FIG 4 is a flowchart of an example technique for providing simultaneous support for user-entered and computer-generated values for an attribute.

FIG. 5A is a representation of first example user interactions with an application including use of a flexible dual data attribute.

FIG 5B is a representation of second example user interactions with an application including use of a flexible dual data attribute.

FIGS. 6A-6E illustrate example user interface components associated with at least one example flexible dual data attribute.

Like reference symbols in the various drawings indicate like elements.

### DETAILED DESCRIPTION

Changing the way a data object attribute's value is defined can require re-designing, or even replacing, the original data attribute (or even the entire data object containing the attribute) so that the attribute's value is defined according to the designer's latest preference. Such redesigns can be cost prohibitive however, particularly in object-oriented systems employing large numbers of data objects and data attribute values in connection with one or more software services. While some systems attempt to avoid the hard choice between user-defined and virtual attributes by providing a computer-defined default value that can be overwritten at the option of the end user, this solution can be limited in that overwriting default values can permanently delete the default value. Further attempts to reapply the computer-generated default value to the data attribute can, on the other hand, permanently overwrite and delete the user-defined attribute value.

In some use cases, it can be advantageous to have a data attribute that maintains co-existing and alternative user-controlled and computer-defined dual attribute values. For instance, a sales module may maintain a product object with a price attribute defining the price of the object. The value of the price attribute may be advantageously calculated, dynamically by a computing device, to reflect an ideal or standard price for the product. However, in some instances, it may be desirable to provide for leeway in setting the product price, such as in instances where a promotional, customized, or other user-defined price is desired. Further, a dual data attribute can provide a two state attribute maintaining alternate user-controlled and computer-defined attribute values. Additionally, the use of such a dual data attribute, as will be described in more detail below, can allow designers to avoid the need to choose between a data attribute that is computer- or user-defined. For instance, a dual data attribute can be easily toggled between its user-defined data attribute value state and computer-defined data attribute value state, allowing the functionality and character of the data attribute to be conveniently toggled and changed from one state to the next without requiring re-engineering of the original data attribute or associated data object.

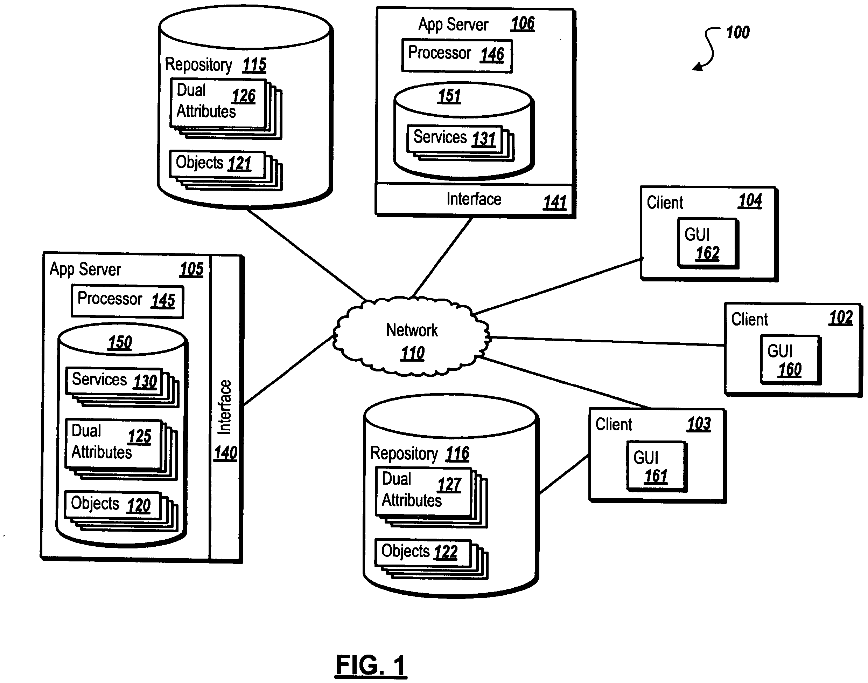

Turning to the example implementation of FIG. 1, the illustrated software environment 100 includes, or is communicably coupled with, one or more clients 102, 103, 104, one or more application servers (e.g., 105, 106), such as application servers within an enterprise software environment, and one or more data repositories (e.g., 115, 116), using one or more networks 110. Each of the servers 105, 106 comprise electronic computing devices operable to receive, transmit, process, store, or manage data and information associated with the software environment 100. As used in this document, the term "computer" is intended to encompass any suitable processing device. For example, the environment 100 may be implemented using computers other than servers, including a server pool. Further, any, all, or some of the servers 105, 106 may be adapted to execute any operating system, including Linux, UNIX, Windows Server, or any other suitable operating system.

In the example implementation illustrated in FIG 1, one or more of the clients 102, 103, application servers 105, 106, and data repositories 115, 116 can store, manage, maintain, manipulate, and otherwise access data objects 120, 121, 122 with associated flexible dual data attributes 125, 126, 127. In some examples, the dual data attributes 125, 126, 127 can be included, integrated, or contained in the data objects themselves, while in other instances the dual data attributes can be maintained as distinct data structures linked to, read by, or otherwise accessed by data objects associated with the dual data attributes. As described in more detail below, dual data attributes 125, 126, 127 can simultaneously maintain multiple alternative values for a single object attribute and can affect user interface components displaying or receiving user input relating to the corresponding object attribute. Accordingly, dual data attributes 125, 126, 127 can be used to conveniently toggle between attribute value states, such as between a virtual attribute value state and a user-input attribute value state.

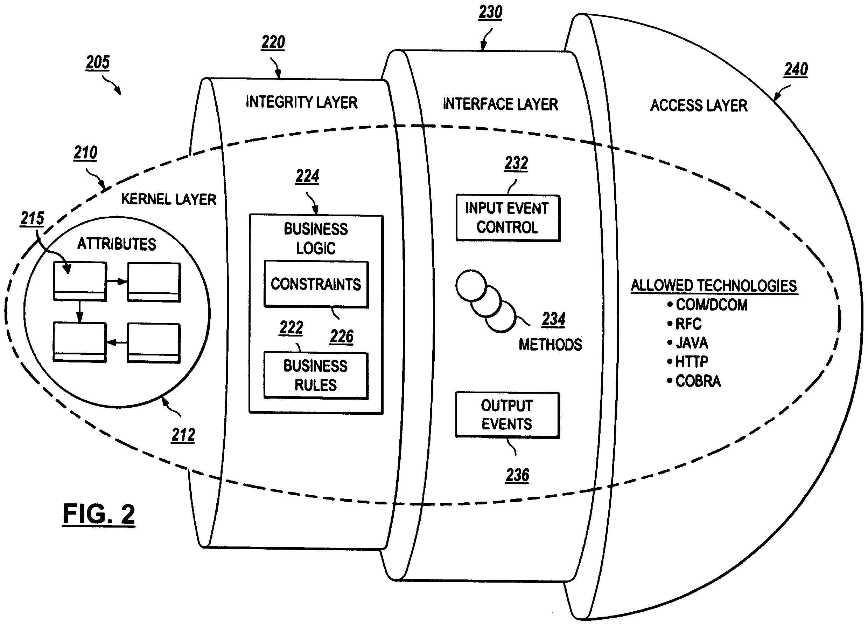

Data objects 120, 121, 123 are data entities including one or more defined or inherited attributes and values that can be operated upon by software functions, operations, applications, modules, and other software entities, such as software application and services. In some instances, attributes can be implemented as object metadata. Further, each object attribute can have associated data defining the values of the corresponding object attribute. As but one example, an object intended for business use can define a customer identity and include attributes such as customer ID, customer name, address, etc. with respective attribute values, or data, of ID = X123, name = James Bond, address = 13 West Cliff Boulevard, etc. Attributes can map to or include dual data attribute structures 125, 126, 127, such as those described in more detail below. Further, in some instances, one or more data objects 120, 121, 122 can be implemented as business objects. FIG. 2 illustrates the structure of a generic business object 205 in environment 100. In general, the overall structure of the business object model can ensure the consistency of the interfaces that are derived from the business object model. The derivation helps ensure that the same business-related subject matter or concept can be represented and structured in the same way in various interfaces. The business object model can define the business-related concepts at a central location for a number of business transactions. In other words, it reflects the decisions made about modeling the business entities of the real world acting in business transactions across industries and business areas. The business object model can be defined by the business objects and their relationship to each other (the overall net structure).

Each business object is thus a capsule with an internal hierarchical structure, behavior offered by its operations, and integrity constraints. Business objects are generally semantically disjointed, i.e., the same business information is represented once. In some embodiments, the business objects are arranged in an ordering framework such that they can be arranged according to their existence dependency to each other. For example, in a modeling environment, the customizing elements might be arranged on the left side of the business object model, the strategic elements might be arranged in the center of the business object model, and the operative elements might be arranged on the right side of the business object model. Similarly, the business objects can be arranged in this model from the top to the bottom based on defined order of the business areas, e.g., finance could be arranged at the top of the business object model with customer relationship management (CRM) below finance and supplier relationship management (SRM) below CRM. To help ensure the consistency of interfaces, the business object model may be built using standardized data types as well as packages to group related elements together, and package templates and entity templates to specify the arrangement of packages and entities within the structure.

A business object may be defined such that it contains multiple layers, such as in the example business object 205 of FIG. 2. The example business object 205 contains four layers: the kernel layer 210, the integrity layer 220, the interface layer 230, and the access layer 240. The innermost layer of the example business object is the kernel layer 210. The kernel layer 210 represents the business object's 205 inherent data, containing various attributes 212 of the defined business object including one or more dual data attributes 215. The second layer represents the integrity layer 220. In the example business object 205, the integrity layer 220 contains the business logic 224 of the object. Such logic may include business rules 222 for consistent embedding in the environment 100 and the constraints 226 regarding the values and domains that apply to the business object 205. Business logic 224 may comprise statements that define or constrain some aspect of the business, such that they are intended to assert business structure or to control or influence the behavior of the business entity. It may pertain to the facts recorded on data and constraints on changes to that data. In effect, business logic 224 may determine what data may, or may not, be recorded in business object 205. The third layer, the interface layer 230, may supply the valid options for accessing the business object 205 and describe the implementation, structure, and interface of the business object to the outside world. To do so, the interface layer 230 may contain methods 234, input event controls 232, and output events 236. The fourth and outermost layer of the business object 205 in FIG. 2 is the access layer 240. The access layer 240 defines the technologies that may be used for external access to the business object's 205 data. Some examples of allowed technologies may include COM/DCOM (Component Object Model/Distributed Component Object Model), CORBA (Common Object Request Broker Architecture), RFC (Remote Function Call), Hypertext Transfer Protocol (HTTP) C++, ABAP, and Java, among others. Additionally, business objects 205 of this embodiment may implement standard object-oriented technologies such as encapsulation, inheritance, and/or polymorphism.

Returning to the example of FIG. 1, application servers 105, 106 can each include at least one interface 140, 141, one or more processors 145, 146, and computer-readable memory 150, 151. Application servers can be configured to serve web services (e.g., 130, 131), such as SOA-based web services, for example. In some instances, some combination of application servers 105, 106 can be hosted on a common computing system, server, or server pool, and share computing resources, including shared memory, processors, and interfaces, such as in an enterprise software system serving services to a plurality of distinct clients and customers. The interfaces 140, 141 can be used for communicating with other systems in a client-server or other distributed environment (including within environment 100) connected to the network 110, for example the one or more clients 102, 103, 104, external data sources (e.g., 115), or any other computing device adapted to interface with the servers 105, 106, including devices not illustrated in FIG 1. Generally, each interface 140, 141 comprises logic encoded in software and/or hardware in a suitable combination and operable to communicate with the network 110. More specifically, the interfaces 140, 141 may comprise software supporting one or more communication protocols associated with communications such that the network 110 or hardware is operable to communicate physical signals within and outside of the illustrated software environment 100.

Each processor 145, 146 can execute instructions and manipulate data to perform the operations of an associated server or system (e.g., 105, 106) and may comprise, for example, a central processing unit (CPU), a blade, an application specific integrated circuit (ASIC), or a field-programmable gate array (FPGA), among other suitable options. Although each processor 145, 146 is illustrated as a single processor, multiple processors may be used according to the particular needs of the associated server. References to a single processor 145, 146 are meant to include multiple processors where applicable. The operations that each processor 145, 146 executes are determined by the purpose and operations of its associated server. Generally, the processor 145, 146 executes instructions and manipulates data to perform the operations of its respective server and, specifically, the software systems, services, and applications hosted by the servers 105, 106.

At a high level, each "server" (e.g., 105, 106) includes one or more electronic computing devices operable to receive, transmit, process, store, or manage data and information associated with the environment 100. Specifically, a server is responsible for receiving requests from one or more clients and sending the appropriate response to the requesting client. In addition to requests from external clients, requests may also be sent from internal users, external or third-party customers, other automated applications, as well as any other appropriate entities, individuals, systems, or computers. For example, although FIG. 1 illustrates each server as a single server, a server can be implemented using two or more servers, as well as computers other than servers, including a server pool. Indeed, a server may be any computer or processing device such as, for example, a blade server, general-purpose personal computer (PC), Macintosh, workstation, UNIX-based workstation, or any other suitable device. In other words, the present disclosure contemplates computers other than general purpose computers, as well as computers without conventional operating systems. Further, servers may be adapted to execute any operating system, including Linux, UNIX, Windows, Mac OS, or any other suitable operating system.

In the case of servers hosting, serving, or otherwise providing software services or products, a processor (e.g., 145, 146) can execute the functionality required to receive and respond to requests from clients, as well as client applications interfacing with the server's hosted application (e.g., 130, 131). It will be understood that the term "application server" (e.g., 105, 106) can include any suitable software component or module, or computing device(s) capable of hosting and/or serving a software application, including distributed, enterprise, or cloud-based software applications. Regardless of the particular implementation, "software" may include computer-readable instructions, firmware, wired or programmed hardware, or any combination thereof on a tangible medium operable when executed to perform at least the processes and operations described herein. Indeed, each software component may be fully or partially written or described in any appropriate computer language including C, C++, Java, Visual Basic, assembler, Perl, any suitable version of 4GL, as well as others. Applications can be implemented as individual modules that implement the various features and functionality through various objects, methods, or other processes, or may instead include a number of sub-modules, third party services, components, libraries, and such, as appropriate. Conversely, the features and functionality of various components can be combined into single components as appropriate.

At a high level, each of the one or more hosted applications and services (e.g., 130, 131) illustrated in the environment 100 can include any application, program, module, process, or other software that may execute, change, delete, generate, or otherwise manage information according to the present disclosure, particularly in response to and in connection with one or more requests received from the illustrated clients 102, 103, 104, as well as other applications. In certain cases, only one hosted application may be located at a particular server. In others, a plurality of related and/or unrelated hosted applications may be stored at a single server, or located across a plurality of other servers, as well. In certain cases, environment 100 may implement a composite hosted application. For example, portions of the composite application may be implemented as Enterprise Java Beans (EJBs) or design-time components may have the ability to generate run-time implementations into different platforms, such as J2EE (Java 2 Platform, Enterprise Edition), ABAP (Advanced Business Application Programming) objects, or Microsoft's .NET, among others. Additionally, applications may represent web-based applications accessed and executed via the network 110 (e.g., through the Internet). Further, one or more processes associated with a particular hosted application or service may be stored, referenced, or executed remotely. For example, a portion of a particular hosted application or service may be a web service associated with the application that is remotely called, while another portion of the hosted application may be an interface object or agent bundled for processing at a remote client (e.g., 102, 103, 104). Moreover, any or all of the hosted applications and software service may be a child or sub-module of another software module or enterprise application (not illustrated) without departing from the scope of this disclosure. Still further, portions of a hosted application can be executed by a user working directly at a server hosting the application, as well as remotely at a client.

Each of the example servers 105, 106 can also include a memory (150, 151 respectively). Further repositories 115, 116 and computing devices (e.g., 102, 103, 104) can also each include at least one memory device. Each memory may include any memory or database module and may take the form of volatile or non-volatile memory including, without limitation, non-transitory memory elements, magnetic media, optical media, random access memory (RAM), read-only memory (ROM), removable media, or any other suitable local or remote memory component. Each memory may store various objects or data, including classes, frameworks, applications, backup data, business objects, jobs, web pages, web page templates, database tables, content repositories storing business or other dynamic information, or other information including any parameters, variables, algorithms, instructions, rules, constraints, or references thereto relevant to the purposes of the particular server. Each memory may also include any other appropriate data, such as VPN applications, firmware logs and policies, firewall policies, a security or access log, print or other reporting files, as well as others. Again, the particular data and instructions stored in each memory (e.g., 115, 116, 150, 151) will be described in detail below in connection with the illustrated implementations of the software environment 100 and components thereof.

Generally, the network 110 facilitates wireless or wireline communications between the components of the software environment 100 (e.g., between the application servers 105, 106, and one or more clients (e.g., 102, 103, 104), as well as between other components as appropriate), as well as with any other local or remote computer, such as those associated with one or more applications or external data sources. The network 110 can be implemented as one or more distinct networks. In any implementation, the network 110 may be a continuous or discontinuous network without departing from the scope of this disclosure, so long as at least a portion of the network 110 may facilitate communications between senders and recipients. The network 110 may be all or a portion of an enterprise or secured network. As an example, in FIG. 1 networks 110 may represent a portion of an enterprise network, or a connection to the Internet. In some instances, a portion of the network 110 may be a virtual private network (VPN). All or a portion of the network 110 can comprise either a wireline or wireless link. Example wireless links may include 802.11a/b/g/n, 802.20, WiMax, and/or any other appropriate wireless link. In other words, the network 110 encompasses any internal or external network, networks, sub-network, or combination thereof operable to facilitate communications between various computing components inside and outside the illustrated environment 100. The network 110 may communicate, for example, Internet Protocol (IP) packets, Frame Relay frames, Asynchronous Transfer Mode (ATM) cells, voice, video, data, and other suitable information between network addresses. The network 110 may also include one or more local area networks (LANs), radio access networks (RANs), metropolitan area networks (MANs), wide area networks (WANs), all or a portion of the Internet, and/or any other communication system or systems at one or more locations.

The illustrated implementation of FIG. 1 includes one or more local and/or remote clients 102, 103, 104. A client 102, 103, 104 can be any computing device operable to connect or communicate at least with an application server 105, 106, and/or the network 110 using a wireline or wireless connection. Each client 102, 103, 104 includes at least one GUI (e.g., 160, 161, 162). In general, the client 102, 103, 104 comprises an electronic computing device operable to receive, transmit, process, and store any appropriate data associated with the software environment of FIG 1. It will be understood that there may be any number of clients 102, 103, 104 associated with environment 100, as well as any number of clients 102, 103, 104 external to environment 100. Further, the term "client" and "user" may be used interchangeably as appropriate without departing from the scope of this disclosure. Moreover, while each client 102, 103, 104 is described in terms of being used by one user, this disclosure contemplates that many users may use one computer or that one user may use multiple computers. As used in this disclosure, the client 102, 103, 104 is intended to encompass a personal computer, electronic notepad, touch screen terminal, workstation, network computer, kiosk, wireless data port, smart phone, personal data assistant (PDA), one or more processors within these or other devices, or any other suitable processing device. For example, the client 102, 103, 104 may comprise a computer that includes an input device, such as a keypad, touch screen, mouse, or other device that can accept information, and an output device that conveys information associated with operations of one or more applications stored and/or executed on an application server (or other servers in environment 100) or on the client 102, 103, 104 itself, including digital data, visual information, or GUI 160, 161, 162. Both the input device and the output device may include fixed or removable storage media such as a magnetic computer disk, CD-ROM, or other suitable media to both receive input from and provide output to users of the clients 102, 103, 104 through the display, namely the GUI 160, 161, 162.

The GUI 160, 161, 162 comprises a graphical user interface operable to allow the user to interface with at least a portion of environment 100 for any suitable purpose, including allowing a user to interact with one or more software applications and services (e.g., 130, 131). Generally, the GUI 160, 161, 162 provides users with an efficient and user-friendly presentation of data provided by or communicated within the system, such as an interactive analytics presentation provided through web service security cockpit framework 130. The term "graphical user interface," or GUI, may be used in the singular or in the plural to describe one or more graphical user interfaces and each of the displays of a particular graphical user interface. Therefore, the GUI 160, 161, 162 can be any graphical user interface, such as a web browser, touch screen, or command line interface (CLI) that processes information in the environment 100 and efficiently presents the results to the user. In general, the GUI 160, 161, 162 may include a plurality of user interface (UI) elements such as interactive fields, pull-down lists, media players, tables, graphics, virtual machine interfaces, buttons, etc. operable by the user at the client. These UI elements may be related to the functions of one or more applications or services (e.g., 130, 131), including applications hosted locally at the client.

While FIG. 1 is described as containing or being associated with a plurality of elements, not all elements illustrated within environment 100 of FIG. 1 may be utilized in each alternative implementation of the present disclosure. Additionally, one or more of the elements described herein may be located external to environment 100, while in other instances, certain elements may be included within or as a portion of one or more of the other described elements, as well as other elements not described in the illustrated implementation. Further, certain elements illustrated in FIG. 1 may be combined with other components, as well as used for alternative or additional purposes in addition to those purposes described herein.

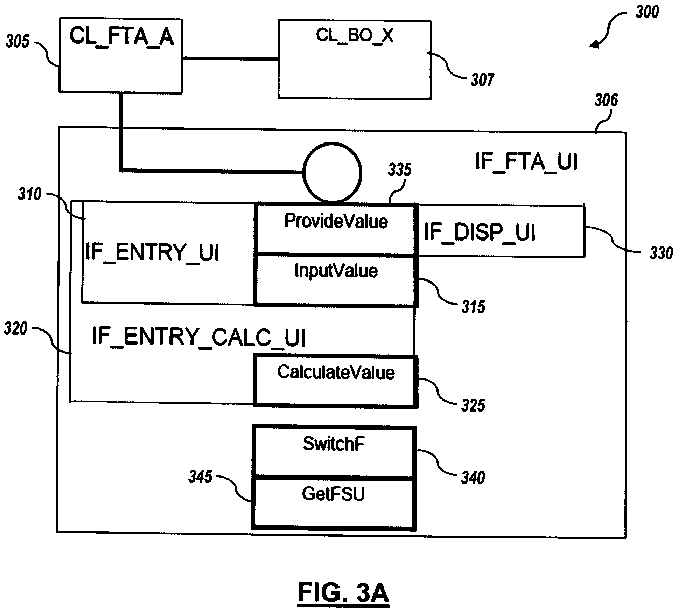

FIG. 3A illustrates an example class diagram 300 of an example flexible dual data attribute. In this example a data attribute A can be characterized by a class CL_FTA_A (305) and represented at runtime as an instance of this class. The data attribute A can be contained in a business object (307) of class CL_BO_X. For instance, business object 307 can be a business object of class X = "product," the attribute representing the product's price (i.e., A = "price"). Data attribute A can be a flexible dual data attribute used in connection with a software interface IF_FTA_UI 306 implemented by Class CL_FTA_A 305. A user interface (UI) component, in some instances, can expose the full flexible functionality of the dual attribute A by addressing and controlling the attribute A via interface IF_FTA_UI 306. Interface IF_FTA_UI 306 can offers methods implemented by software modules, including a ProvideValue module (335), InputValue module (315), CalculateValue module (325), SwitchF module (340), and GetFSU module (345).

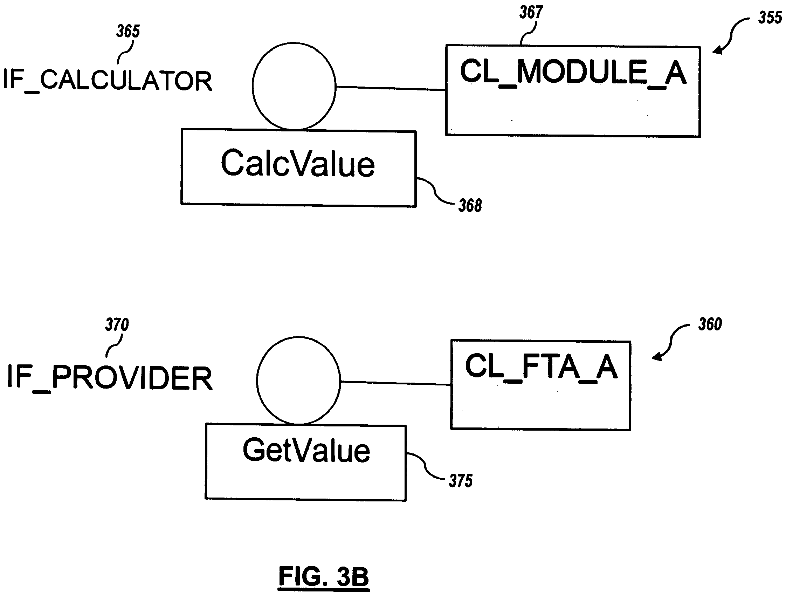

Interface IF_FTA_UI in diagram 300 can include a base interface IF_ENTRY_UI (310) with an "InputValue" module 315 configured to enable a user interface (UI) component, such as an entry form in an electronic form, to pass user-defined values of the attribute A to, for example, a run time instance of business object 307. Another module ProvideValue (335) can enable a UI component to retrieve the current value of A, for instance, in connection with a data consumer's consumption of attribute A. Another base interface of the dual data attribute IF_DISP_UI (330) can be configured to enable a user interface component that displays the current attribute value without, however, offering the user the ability to change values of one or more values of the dual attribute. IF_DISP_UI (330) can, in some instances, be contained in IF_ENTRY_UI (320). While IF_DISP_UI(330) can be configured to open a read-only module and channel (e.g., ProvideValue (335)), an interface IF_ENTRY_UI (320) can facilitate write module InputValue (315). IF_ENTRY_CALC_UI (320) can formally be an extension of IF_ENTRY_UI (320). The method CalculateValue (325) (i.e., IF_ENTRY_CALC_UI〉̶CalculateValue) can be associated with and call a module CL_MODULE_A 367 (shown in FIG. 3B) adapted to calculate the value based on the context of the runtime and algorithms used by the system to generate values for the particular attribute. System-generated values can provide users, for instance, with suggested, ideal, or default attribute values which a user can choose to adopt or reject. For instance, a system-generated value can be provided as a default value or auto-complete value within an entry field UI component. As an example, a product price attribute can be calculated based on algorithms and information considering various market conditions, supply, aggregate demand, wholesale prices, manufacturing costs, etc. to derive a varying, and in some cases, real time market price calculation. As can be appreciated, a product price data attribute is but one of potentially limitless examples of data attributes, and other data attributes, relating to other entities, subject matter or concepts modeled by data objects and data object attributes, can also exist adopting other algorithms and contexts appropriate for the data attribute.

As shown in class diagram 300 of an example flexible dual data attribute A, at least two alternative values for the attribute can be maintained. First, a user-controlled value can be maintained associated with the IF_ENTRY_UI interface 310, and second, a computer-generated attribute value can also be maintained associated with the IF_ENTRY_CALC_UI interface 320. A SwitchF module or method 340 can be provided to control which of the user-controlled value and computer-generated value is presented as the attribute's value at runtime (e.g., during access of the attribute by a software entity accessing the business object 307 containing the attribute). For instance, a flag can be set to a value indicating which of the at least two alternate attribute values is to be used. The "SwitchF" method allows the flag value to be toggled between the computer-generated, or virtual, value and the user-controlled state value. Accordingly, a UI component can use a "GetFSU" method 345 to access any one of the at least three sub-attributes of the flexible dual data attribute, namely the flag value F, system calculated value S, or user-controlled value U. One or more sub-attributes F, S, and/or U can be provided for use through interface IF_FTA_UI (350).

Interface IF_FTA_UI 306 and its sub-partitions (e.g., 310, 320, 330) can be reserved for use in connection with UI components accessed by users. Non-human consumers of the data attribute A can access and modify the attribute via an alternative interface, IF_PROVIDER (370), shown in FIG 3B. A GetValue method (375) provides read access to the attribute A, as an analogue to the ProvideValue method (335) for use in connection with human users. Providing such separation can allow the system, for example, to detect when a system-generated value is published to a human user. Further, the IF_PROVIDER interface 370 can provide the "GetValue" module 375 through class CL_FTA_A for use in mediating access to the attribute, for instance, controlling access to the data attribute by the business logic of consuming software services and applications. In some instances, data consumers (e.g., software services and applications) accessing the attribute value via the "GetValue" module 375, can be agnostic to whether the attribute value is derived from the user-controlled sub-attribute U or from the run time context evaluated by the calculation module CL_MODULE_A (367). Indeed, the "GetValue" module 375 can hide whether the attribute value has been derived from the user-controlled sub-attribute U or has been calculated at run time.

FIG. 3B further shows a class diagram 355 of a system calculator interface and a further class diagram 360 of a provider interface (370) adapted to interface with or, in some cases, be integrated with the dual data attribute class for use by software entities without UI components (i.e., non-human consumers). The system controlled value calculator can be called by such entities via a method CalcValue (368) provided through the IF_CALCULATOR interface 365 (i.e., IF_CALCULATOR→CalcValue), through class CL_MODULE_A (367) for use in calculating and generating the computer-generated attribute value. The IF_CALCULATOR→CalcValue can be the system-triggered analogue of the user-triggered IF_ENTRY_CALC_UI→CalculateValue method described above.

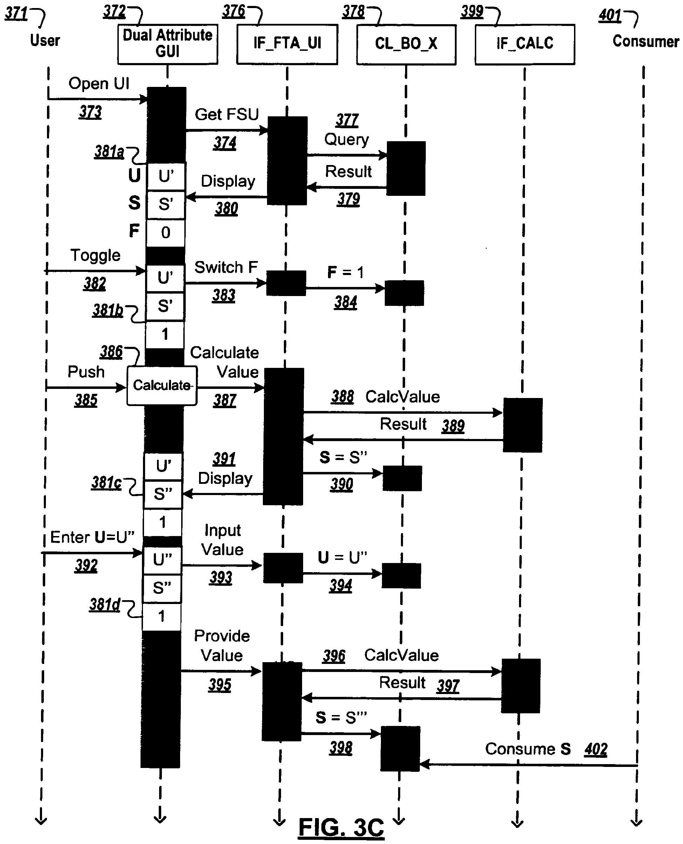

FIG 3C illustrates an example transaction utilizing a data attribute of a data object utilizing one or more of the class methods modules described in the examples of FIGS. 3A-3B above. A user 371 can open 373 a user interface component (GUI) 372 adapted for use in connection with a flexible dual data attribute. Upon opening the GUI 372 a GetFSU method 374 can be called through an IF_FTA_UI interface 376 adapted for handling dual data attribute read and write requests received through a dual-data-attribute-enable user interface component (e.g., GUI 372). The interface 376 can query 377 the business object (e.g., of class CL_BO_X) 378 for the **F, S,** and **U** values of a particular dual attribute of the object 378 returned 379 through the interface 376 for display 380 to the user via GUI 372. In this example, the initial values 381a presented to the user include **U**=U' and **S**=S' where the field flag value **F** is set to "0" indicating that user-provided values are to be provided as the value of the dual data attribute.

A user request can be received 382 through the GUI 372 to toggle the value of the field flag value **F** from "0" to "1" to indicate that virtual, system-calculated values are to be provided as the value of the dual data attribute. The toggled field flag value **F** can be presented 381b to the user via GUI 372. Additionally, a SwitchF method 383 can be called, via interface 376, to update 384 the value of **F** at the object 378.

A "Calculate" command can be initiated by a user, for example, via a "Calculate" button 386 provided through GUI 372. A user can push 385 the button 386 to force the recalculation of the system-calculated value of **S.** In this example, a Calculate Value method 387 is called, through interface 376, which, in turn, issues a CalcValue request 388 to a calculation module IF_CALC 399 adapted to perform the corresponding calculations for the particular dual data attribute. The calculation module 399 can return 389 the result of the calculation (in this case S"), thereby updating 390 the value stored in the object 378 to **S**=S". Further, the updated, recalculated value of **S** can be reflected in the GUI displayed 391 to the user 371 (at 381c).

In this example, although the field flag value **F** has been set to the system-calculated attribute value, user entries can still be received to update the value **U** of the dual data attribute. For instance, a user 371 can specify 392 that the user-defined value is to be redefined as **U**=U". In response, an InputValue method 393 can be called to update 394 the value **U** stored at corresponding business object 378 to **U**=U". Updating the value of **U** can also be reflected 381d through the GUI 372 displayed to the user 371.

In the example of FIG. 3C, with the field flag value **F** has been set to specify use of the system-calculated attribute value, the value of the dual data attribute consumed by consumers will be the system-generated value **S.** A ProvideValue method 395 can be called, thereby triggering an update of the system-generated value **S** by recalling the CalcValue method 396 using the calculate module 399. The new result **S**=S''' can be returned 397 and updated 398 at the object 378 to be consumed 402 by a data consumer 401. The example of FIG. 3C is non-limiting and for illustrative purposes only and is directed, for example, to a particular instance involving modification of dual data attributes by users via a UI (as opposed to automatically, by non-human consumers) while a field flag value **F** has been set to the system-calculated attribute value. For the sake of brevity, corresponding illustrations of examples transactions involving dual data attributes accessed and modified under different conditions and using other interfaces and methods, such as those described elsewhere above (for example for software-based, non-human consumers), have been omitted. Analogous transactions can be performed and should be apparent in light of the present disclosure.

The following are additional details of example implementations of the class methods outlined in connection with FIGS. 3A-3B:

| **Method** | **Returning Parameter** | **Importing Parameter** | **Exceptions** |
|---|---|---|---|
| IF_CALCULATOR →CalcValue | R_S (of type A) | None | None |

The result of this method is the value calculated by the calculation module. The context is provided in this example by the implementation of the module. As a result, an importing parameter is not needed.

| **Method** | **Returning Parameter** | **Importing Parameter** | **Exceptions** |
|---|---|---|---|
| IF_PROVIDER →GetValue | R_S (of type A) | None | None |

The result R_A of the IF_PROVIDER〉̶GetValue method is the only value business logic can rely on when consuming the dual data attribute. The IF_PROVIDER〉̶GetValue method can be the general access method for use by all non-UI data consumers of the dual data attribute.

| **Method** | **Returning Parameter** | **Importing Parameter** | **Exceptions** |
|---|---|---|---|
| IF_DISP_UI →ProvideValue | R_S (of type A) | None | None |

The semantic of IF_DISP_UI〉̶ProvideValue approximates that of IF_PROVIDER〉̶ GetValue. Therefore the call to IF_DISP_UI〉̶ProvideValue can be internally delegated to the calculator interface. The use of interface IF_DISP_UI can further be used to identify, to the attribute instance, that the UI is the caller of the provide value request.

| **Method** | **Returning Parameter** | **Importing Parameter** | **Exceptions** |
|---|---|---|---|
| IF_ENTRY_UI →InputValue | R_R (0 = accepted; 1 = accepted but without impact) | I_U (of type A) | invalid_value (not accepted) |

The task of this method is to set the value of A to the importing parameter I_U. The importing parameter I_U can be assumed to be a valid value, or checked to ensure that a valid value has been entered. The method can throw the exception "invalid_value" in response to the detection of an invalid value, causing the value of attribute A to remain unchanged. When the flag sub-attribute **F** value indicates that the computer-generated value is to be used, InputValue can have no further impact on the business process utilizing the attribute A, even though the new entered value I_U is valid and could be accepted . The returning parameter value R_R can indicate whether the InputValue method result will be used by business logic calling the attribute's data object, given the status of the flag sub-attribute. In some instances, even when the flag value is set to indicate that the computer-generated value is to be used, InputValue can be used to internally change the value of the user-controlled value **U.** Further, in some instances, the caller of IF_ENTRY_UI does not know the internal structure of the attribute instance (e.g., the flag value **F).** For instance, IF_ENTRY_UI can, in some examples, be introduced as a reduced view of a flexible dual data attribute by UI elements including a single read- and a single write-channel to the attribute value (e.g., a typical entry field in an electronic form), with no view of the flag value **F.** Consequently, in such examples, a user cannot take into account the internal state of F. Accordingly, the semantic of R_R can be defined by two call sequences:
Sequence 1:

| | |
|---|---|
| ProvideResult | R_A→ A |
| InputValue (I_U = B) | R_R →1 |
| ProvideResult | R_A →* (calculated anew) |

Sequence 2:

| | |
|---|---|
| ProvideResult | R_A →A |
| InputValue (I_U = B) | R_R →0 |
| ProvideResult | R_A →B |

| **Method** | **Returning Parameter** | **Importing Parameter** | **Exceptions** |
|---|---|---|---|
| IF_ENTRY_CALC_UI →Calculate Value | R_S (of type A) | None | None |

The semantics of IF_ENTRY_CALC_UI→CalculateValue approximates that of method IF_CALCULATOR→CalculateValue. Therefore the call to IF_ENTRY_CALC_UI→ CalculateValue can be internally delegated to the calculator interface. The use of interface IF_ENTRY_CALC_UI can further be used to identify, to the attribute instance, that the UI is the caller of the calculation request.

| **Method** | **Returning Parameter** | **Importing Parameter** | **Exceptions** |
|---|---|---|---|
| IF_FTA_UI→ SwitchF | None | I_F (on, off) | None |

The task of this method can be limited to toggling the flag sub-attribute from user-controlled value to computer-generated value and vice versa.

| **Method** | **Returning Parameter** | **Importing Parameter** | **Exceptions** |
|---|---|---|---|
| IF_FTA_UI→ GetFSU | (A→F, A→S, A→U) | None | None |

The task of this method can be used to obtain the current internal status of the dual data attribute's sub-attribute values A→F, A→S, A→U.

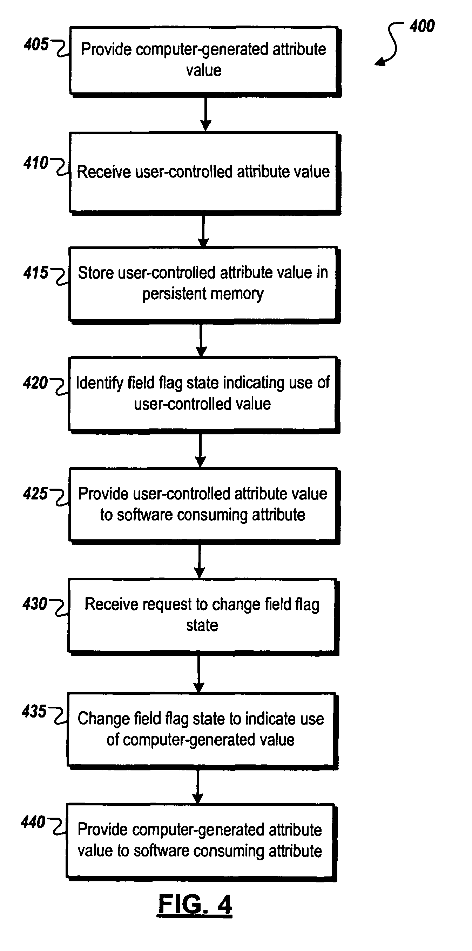

Turning now to the flowchart 400 of FIG. 4, an example technique is shown for flexibly providing alternative attribute values for a single attribute of a data object. A variable, computer-generated value for a flexible dual value data attribute can be provided 405, the computer-generated value having a first value at a first period in time. A user-specified value for the dual value data attribute can be received 410, for instance, through a first entry field of a user interface component associated with the dual value data attribute. The user-specified value can be persistently stored 415 in memory as associated with the dual value data attribute. A field flag value can be identified 420, persistently stored in memory and corresponding to the dual value data attribute, as set to indicate a first flag state specifying that the stored user-specified value is to be used for the dual value data attribute by software consuming the dual value data attribute. Consequently, the stored user-specified value can be provided 425 for use by at least one software application consuming the dual value data attribute based on the field flag value being set to the first flag state. A request can be received 430, at a second instant in time subsequent to the first instant, to change the value of the field flag value to indicate that a computer-generated value of the dual value data attribute is to be used by software consuming the dual value data attribute. The field flag value can be changed 435 according to the request, from a first flag state to a second flag state. At a third instant in time, subsequent to the second instance and the changing 435 of the field flag value, the variable computer-generated field value can be provided 440 for use by at least one software application consuming the particular data, where the variable computer-generated field value has a second value at this third instant in time, the second value different from the first value.

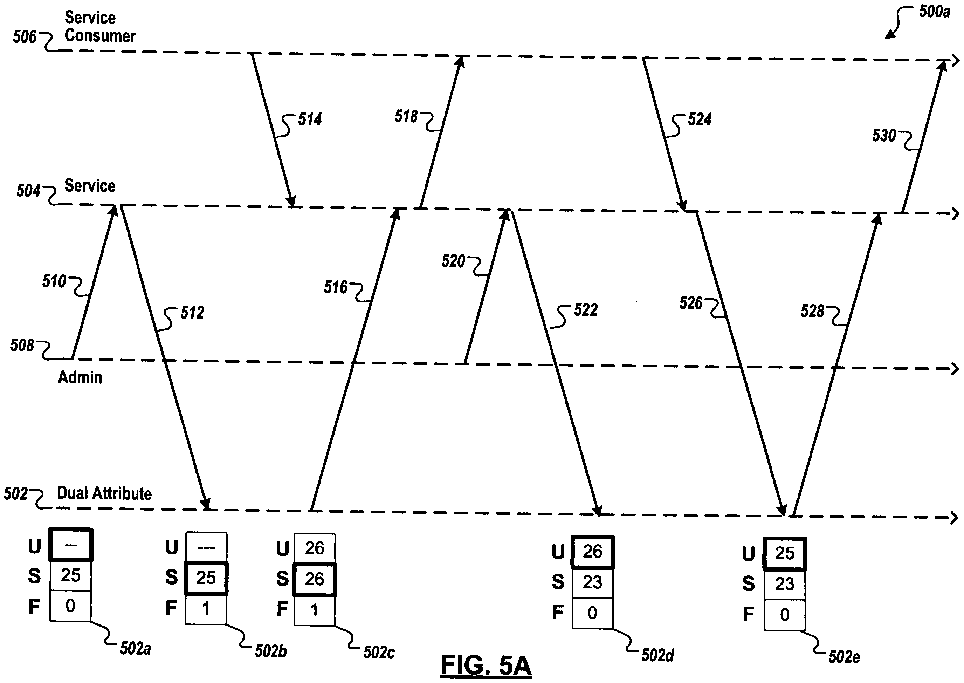

FIG 5A illustrates a representation 500a of first example interactions with a software application or service 504 making use of, or consuming, a flexible dual data attribute 502. The service 504 can be served, executed on, or otherwise provided through one or more application servers and/or client devices for use by at least one service consumer 506. The service consumer 506 can include client computing devices utilized by human users or other software or hardware utilizing the service provided by the application server 504. Parameters of the service 504 can be controlled by an administrator 508 responsible for managing the operation and configuration of the service 504 as well as dual data attributes (e.g., 502) used by the service 504. Accordingly, a first request 510 from the administrator user (and/or software program) can be sent to the service 504 indicating that the field flag value **F** of the dual data attribute 502 should be changed from an initial value **F**=0 (at 502a), indicating that a user-controlled attribute value **U** should be provided as the attribute value to service consumers 506, to a second value **F**=1, indicating that a computer-generated attribute value S should be provided as the attribute value in connection with a service consumer's use of the service 504 using the dual data attribute 502. In response to the request 510, the field flag value **F** of the dual data attribute can be changed 512 to **F**=1 (at 502b). While FIG. 5A illustrates service 504 initiating the change 512 to the field flag value **F**, other components can also or alternatively initiate and manage parameters of the dual data attribute 502, such as a distinct administrator program associated with administrator 508.

With the field flag value **F** of the dual data attribute changed 512 to **F**=1 (at 502b), requests (e.g., 514) from service consumers 506 that involve the use of attribute 502 will be answered (e.g, 518) by service 504 using the current computer-generated attribute value **S.** In some instances, the computer-generated attribute value **S** can vary with time, as the value of **S** is dynamically calculated in the background by a calculation module adapted to calculate the value of **S** for the particular dual data attribute 502. For example, from a first instant in time corresponding with dual data attribute value 502a to a second instant in time corresponding to dual data attribute value 502c, the value of computer-generated attribute value **S** has changed from "25" to "26." Accordingly, when service 504 gets, or consumes, the value of dual data attribute 502 in response to consumer request 514, the value that is returned and used by service 504 is **S**=26. The service consumed 518 by service consumer 506 can be influenced by the value of dual data attribute 502 used by service 504. Further, in the example of FIG. 5A, the user-controlled value **U** at 502a, 502b can be updated upon consumption by a data consumer (i.e., service 504) of the dual data attribute 502 at 502c, to adopt the last-consumed computer-generated value. The automatically-updated value **U,** in this particular example, is user-controlled in the sense that a user or consumer implicitly (or, in some cases, explicitly) accepted the value **S** calculated and provided by the calculation module associated with dual data attribute 502. In other examples, consumption of a computer-generated attribute value **S** will not update the user-controlled value **U** of the dual data attribute 502. For example, in some implementations, only a direct user data entry can change the user-controlled value **U.**

Continuing with the examples of FIG. 5A, at a time subsequent to the consumption of the data attribute at 502c, an administrator 508 may wish to change the configuration of service 504 so that certain attribute values are no longer automatically calculated but instead based on user inputs. Accordingly, a second request 520 can be sent to toggle the field flag sub-attribute **F,** thereby triggering 522 change of the field flag value back to **F**=0 (at 502d), indicating that a user-entered value **U** should be used for the value of dual data attribute 502 in lieu of the computer-generated value **S.** Thereafter, a user request 524 can be received from a service consumer 506 including a proposed value for the dual data attribute 502. The request 524 can be used to update 526 the user-entered value **U** at 502 (i.e., U="25"). As seen in FIG. 5A, a user-entered value **U** (at 502e) can differ from a computer-generated value **S,** the difference in attribute values propagating through to results 530 generated by a service (e.g., 504) consuming 528 the dual data attribute 502.

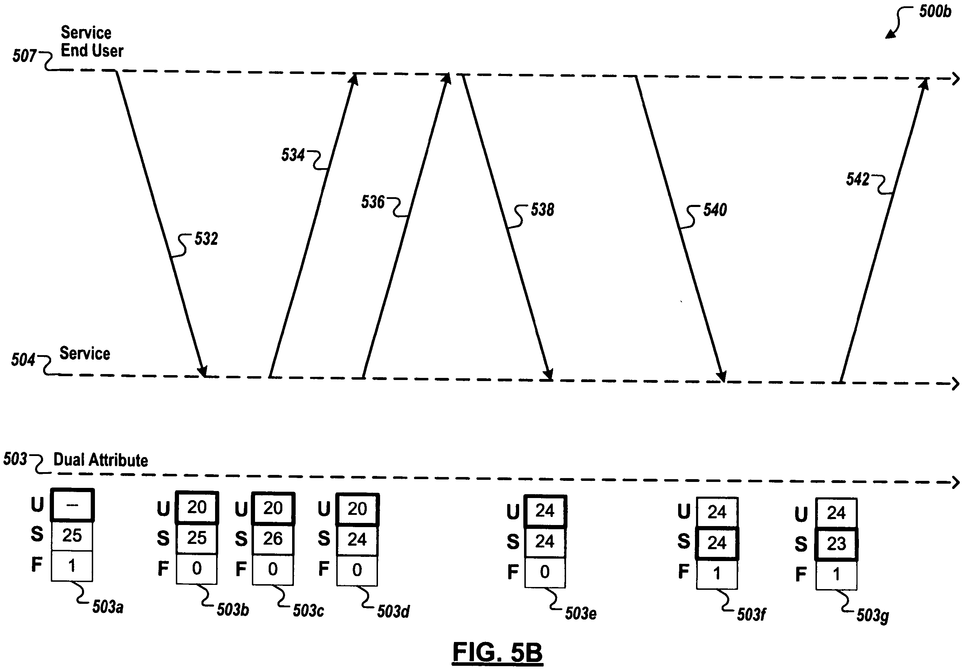

Turning to the example 500b of FIG. 5B, a service end user 507 interacts with a service 504 making use of a data object associated with or containing dual data attribute 503. In this example, the end user 507 interacts with service 504 using a graphical user interface that includes one or more user interface elements that correspond to at least one sub-attribute value (i.e., **F, S,** or **U)** of the dual data attribute 503. In the example of FIG. 5B, initially, at 503a, the dual data attribute is set (e.g., **F**="1") to indicate that a system generated attribute value **S** is to be used. However, a user entry 532 is received by the service end user 507 indicating that the attribute value should instead be user-controlled (i.e., toggling **F** from "1" to "0") and that the value of the dual data attribute (i.e., **U)** should be "20" (e.g., as shown at 503b). The end user 507 can specify this, for example, by toggling a field flag value user interface control or simply by entering values into a user interface form element. Indeed, the end user 507 may initially be presented with the computer-generated attribute value **S**="25," for example, as a default value in the user interface form element for the dual data attribute 503. Overwriting the presented default value can both enter a new user-specified value to **U** while at the same time automatically toggling the field flag value **F** to indicate that user-controlled values are to be used for the dual data attribute's value. With the field flag value **F** set to specify the use of the newly entered and stored user-controlled value **U,** the service can perform operations and deliver results to the end user based on the dual data attribute having the value "20," as defined in sub-attribute **U.**

In some examples, a user interface presenting forms and information to an end user (e.g., 507) related to sub-attributes of the dual data attribute 503, can display information identifying both the computer-generated value as well as the user-controlled value. This can be useful, in some instances, so as to allow a user to compare the user-controlled value with the computer-generated value, for example, to guide whether the computer-generated value is generally more ideal than user-entered values (e.g., prompting toggling of the field flag value back to **F**="1"), to guide the end user's entry of values for the attribute, or to provide feedback to the end user regarding the end user's entered values (e.g., in connection with a testing or learning software service where a "correct" computer-generated value can be compared against a user-entered value). Accordingly, in the example of FIG. 5B, the value of the computer-generated attribute value **S** can be presented 536 to the end user 507. In this particular example, the guidance of the computer-generated attribute value influences the user to adopt 538 the value of **S** as the user's own entered value at 503e (i.e., changing the value of **U** to "24"). Further, the end user 507 can request 540 that the computer-generated value **S** again govern for purposes of consumption of the dual data attribute 503 by the service 504. Subsequent results (e.g., 542) returned by the service 504, based on the dual data attribute 503, can then reflect the dynamically calculated value of the computer-calculated attribute value **S.** The end user 507 can then benefit from the up-to-date nature of the computer-calculated attribute value **S** while being capable of recalling the last user-entered attribute value **U** (e.g., **U**=24 at 503g), in the event that use of the computer-calculated attribute value **S** is not appropriate in a particular circumstance.

FIGS. 5A and 5B are provided by way of illustrative example for convenience in describing features of concepts included in the present disclosure. While FIGS. 5A and 5B show only a single software service accessing dual data attribute 502, multiple instances of a particular software service or a plurality of distinct software services or application can access and consume the same dual data attribute. In such an example, the setting of a field flag value to either a user-controlled or computer-calculated attribute value state can be applied to each software application or application instance accessing and consuming the dual data attribute. For instance, an administrator or previous data consumer can toggle the field flag value from one state to another, thereby affecting subsequent calls by other consumers of the dual data attribute. In other examples involving multiple applications consuming a particular dual data attribute, parallel versions of the dual data attribute can be maintained for each particular consumer of the dual data attribute, allowing each consumer control over at least the user-controlled sub-attribute value and field flag state value of their respective copy of the dual data attribute.

In some instances, a single data object, such as a business object, can include multiple data attributes of which two or more are dual data attributes. Indeed, in some examples, data objects can be developed where each and every attribute is a dual data attribute. In cases where a single data object is associated with multiple dual data attributes, the field flag values of the multiple dual data attributes of a single data object can be controlled individually and independent of the other dual data attributes of the object or, alternatively, as a batch. For instance, an administrator or user can request that all dual data attributes of a particular data object have field flag values set to the same state. Alternatively, the administrator or user can conveniently opt to set each dual data attribute field flag value to a particular state. Indeed, in some examples, particular attributes of a data object may be more amenable to user or computer control at a given instant in time. Through the use of dual data attributes, however, the designer need not be wedded to the original selection of a user- or computer-controlled attribute value, with the dual data attribute providing the designer with the ability to conveniently toggle between user- and computer-controlled attribute states.

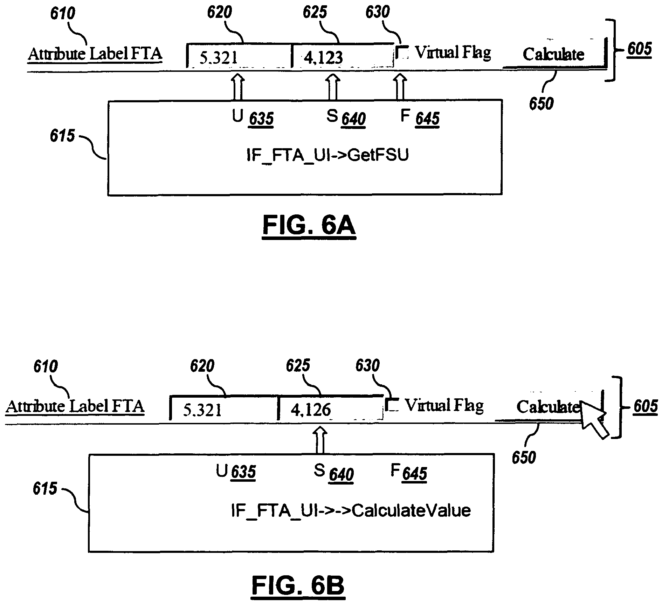

FIGS. 6A-6E illustrate representations of example user interface components associated with and interacting with at least one example flexible dual data attribute. For example, in FIG. 6A, a user interface component 605 includes a presentation of a label, name, or other information (e.g., 610) describing features of or identifying the dual data attribute 615 associated with the user interface component 605. In this particular example, three form fields 620, 625, 630 are included in the user interface component 605, corresponding to dual data attribute 615 sub-attributes **U** (user-controlled attribute value option) (635), **S** (computer-generated attribute value option) (640), and **F** (flag field value) (645) respectively. Additionally, in this example, a Calculate button 650 is provided allowing a user to update the computer-generated dual data attribute value **S** 640 by clicking the button 650 and calling a method (e.g., IF_FTA_UI→CalculateValue), as shown in FIG. 6B.

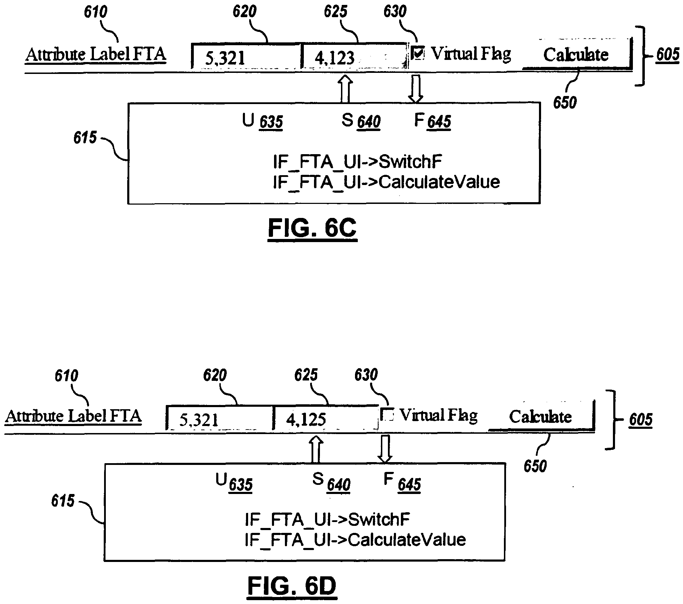

Returning to FIG. 6A, user interface component 605 can be initialized by calling, among other methods, an IF_FTA_UI→GetFSU method, similar to that described above, to initially populate the fields 620, 625, 630 with the current, stored sub-attribute values **U** (635), **S** (640), and **F** (645) of the dual data attribute 605. Using the interface components, the user can also update values of the dual data attribute sub-attributes, particular the sub-attribute values **U** (635) and **F** (645). For instance, as shown in FIG. 6C, a user can select the "Virtual Flag" checkbox field 630 to toggle the value of F (645) to indicate that the dual data attribute should function as a virtual attribute, i.e., where the computer-generated attribute value **S** (640) is used by consumers of the dual data attribute 605. Selection of checkbox field 630 can call a method (e.g., IF_FIA_UI→SwitchF) to toggle the value of sub-attribute **F** (645) as well as automatically update the computer-generated sub-attribute value **S** (640) (e.g., using method IF_FTA_UI→CalculateValue). Further, when sub-attribute **F** (645) is set to specify use of the computer-generated sub-attribute value **S** (640) and, thereby, the disabling of user-controlled sub-attribute value **U** (635), the form field 620 adapted for accepting user-specified attribute values can be temporarily disabled until the value is sub-attribute is toggled again. In this example, when field flag sub-attribute **F** (645) is in this state, only checkbox field 630 can be interacted with by the end user, the remaining form fields 620, 625 disabled for user interaction (i.e., fields shown as greyed-out in FIGS. 6A-6E).

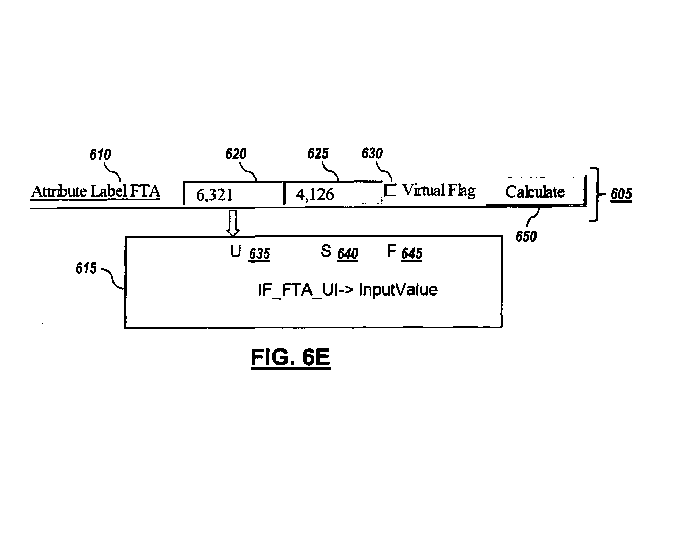

As shown in FIG. 6D, when field flag sub-attribute **F** (645) is toggled back, allowing the user-controlled sub-attribute value **U** to govern as the value of dual data attribute 605, the functionality of form field 620 can be restored to allow a user to enter data and modify the value of sub-attribute **U** (635). For instance, as shown in FIG. 6E, a user enter the value "6,321" in field 620 to change the value of sub-attribute **U** (635) from "5,321" (e.g., using method IF_FTA_UI→InputValue). Further, in this example, a user can be disabled from entering data in form field 625 as form field 625 corresponds to the computer-generated sub-attribute **S** (640). Consequently, as the value presented in form field 625 is controlled by a computing system, such as calculation module software, form field 625 can be limited to displaying the value of sub-attribute **S** (640) to the end user.

While FIGS. 6A-6E illustrate one particular example of a user interface component 605 and how user interactions with the user interface component trigger modifications of and methods involving the underlying dual data attribute, a variety of other user interface component types, designs, formats, and functionality can be supported, not otherwise shown or described in FIGS 6A-6E. Indeed, principles of the underlying dual data attribute can be largely agnostic to the form and design of user interface components used to modify or view sub-attribute values (e.g., **U, S,** and **F)** of the dual data attribute. For instance, in an alternative implementation of a user interface component a single entry form field (similar to form field 620 shown in the example of FIGS 6A-6E) can be provided together with a control adapted to allow a user to toggle the field flag value, where toggling the field flag value toggles which of the user-controlled or computer-generated attribute value is presented in the single entry form field. In still other examples, a user's attempt to input data in an entry form field (e.g., the single entry form embodiment described above) can automatically toggle the field flag value to specify that user-controlled attribute values are to govern. Other examples can also be implemented in connection with the dual data attribute described above.

Although this disclosure has been described in terms of certain implementations and generally associated methods, alterations and permutations of these implementations and methods will be apparent to those skilled in the art. For example, the actions described herein can be performed in a different order than as described and still achieve the desirable results. As one example, the processes depicted in the accompanying figures do not necessarily require the particular order shown, or sequential order, to achieve the desired results. In certain implementations, multitasking and parallel processing may be advantageous. Additionally, other user interface layouts and functionality can be supported. Other variations are within the scope of the following claims.

## Claims

1. A computer-implemented method comprising:
providing, at a first instant in time, a variable computer-generated value for a dual value data attribute, wherein the variable computer-generated field value has a first value at the first instant;
receiving a user-specified value for the dual value data attribute;
storing, in at least one memory device, the user-specified value for the dual value data attribute;
identifying that a field flag value, persistently stored in memory and corresponding to the dual value data attribute, is set to indicate a first flag state specifying that the stored user-specified value is to be used for the dual value data attribute by software consuming the dual value data attribute;
providing the stored user-specified value for use by at least one software application consuming the dual value data attribute based on the field flag value being set to the first flag state;
changing, at a second instant in time subsequent to the first instant, the value of the field flag value from the first flag state to an alternative second flag state indicating that the computer-generated value is to be used by software consuming the dual value data attribute; and
providing, at a third instant in time subsequent to the second instant, the variable computer-generated field value for use by at least one software application consuming the particular data, wherein the variable computer-generated field value has a second value at the second instant, the second value different from the first value.

2. The method of claim 1, wherein the dual value data attribute is associated with a first data entry field and the user-specified value for the dual value data attribute is received through the first data entry field.

3. The method of claim 1 or 2, wherein the first and second applications are the same software application or
are different software applications.

4. The method of any one of the preceding claims, wherein the field flag value is changed from the first flag state to the second flag state in response to a user request to change the field flag value from the first flag state to the second flag state.

5. The method of any one of the preceding claims, wherein the user-specified value includes
a computer-generated value accepted by a user; and/or
a value entered by a user in the first entry field.

6. The method of any one of the preceding claims, further comprising:
receiving data identifying a user acceptance of the second value of the variable computer-generated field value; and
storing the second value of the variable computer-generated field value in the memory, wherein storage of the second value of the variable computer-generated field value replaces the previously-stored user-specified value in the memory.

7. The method of any one of the preceding claims, further comprising providing, at an instant in time between the first instant and second instant, the stored user-specified value for use by a third software application consuming the first data structure based on the field flag value being set to the first flag value.

8. The method of any one of the preceding claims, further comprising:
presenting the first value of the variable computer-generated field value and the user-specified value on a user interface of a computing device.

9. The method of claim 8, further comprising presenting a representation of the field flag value with the first value of the variable computer-generated field value and the user-specified value on the user interface of the computing device; and/or
wherein the first value of the variable computer-generated field value and the user-specified value are presented in connection with the first entry field on the user interface of the computing device.

10. The method of any one of the preceding claims, wherein the first entry field is included in an interactive, digital form presented to a user; and/or
wherein the variable computer-generated field value is dynamically-calculated by at least one computing device; and/or
wherein the user-specified value for the dual value data attribute first entry field, the variable computer-generated value for the dual value data attribute, and field flag value are each stored in a dual attribute data structure corresponding to the dual value data attribute; and/or
wherein the field flag value is automatically set to the first field flag value in response to receiving the user-specified value for the first entry field.

11. An apparatus comprising non-transitory computer readable medium storing:
a first dual attribute data structure corresponding to a first dual value data attribute comprising:
a first memory resource persistently storing a user-specified value for the first dual value data attribute;
a second memory resource maintaining a computer-generated virtual attribute value for the first dual value data attribute; and
a third memory resource persistently storing an attribute flag value for the first dual value data attribute, wherein the attribute flag value for the first dual value data attribute specifies which one of the user-specified value and virtual attribute value is to be provided for the first dual value data attribute during processing of the first dual value data attribute by a software application.

12. The apparatus of claim 11, wherein a first entry field of an interactive digital form corresponds to the first dual value data attribute and user entries of data into the first entry field are stored in the first memory resource; and/or
wherein the computer-generated virtual attribute value is modified dynamically independent of the user-specified value.

13. The apparatus of claim 11 or 12, wherein the computer readable medium further stores a second dual attribute data structure corresponding to a second dual value data attribute, the second dual attribute data structure comprising:
a fourth memory resource persistently storing a user-specified value for the second dual value data attribute;
a fifth memory resource maintaining a computer-generated virtual attribute value for the second dual value data attribute; and
a sixth memory resource persistently storing an attribute flag value for the second dual value data attribute, wherein the attribute flag value specifies which one of the user-specified value of the fourth memory resource and virtual attribute value of the fifth memory resource is to be provided for the second dual value data attribute during processing of the second data attribute by a software application.

14. The apparatus of claim 13, wherein the first dual value data attribute and the second dual value data attribute are each attributes of a particular data object.

15. Computer program product comprising computer readable instructions, which when loaded and run in a computer system and/or computer network system, causes the computer system and/or the computer network system to perform operations according to a method of any one of claims 1 to 10.
